# EUROPÄISCHE PATENTANMELDUNG

(11) **EP 2 759 366 A1**
(43) Veröffentlichungstag der Anmeldung: **30.07.2014**
(21) Anmeldenummer: 13152639.4
(22) Anmeldetag: 25.01.2013
(51) Int. Cl.: B23K 10/02, B23K 15/00, B23P 6/04, B23K 26/26, B23K 26/34

(54) **Verfahren zur Schmelzbadsicherung zum Umschmelzen von durchgehenden Rissen**

(71) Anmelder: Siemens Aktiengesellschaft, 80333 München (DE)
(72) Erfinder: Burbaum, Bernd, Dr., 14612 Falkensee (DE)

(57) **Zusammenfassung**

Durch das Erzeugen von Umschmelzbereichen (28) in einer Längsrichtung (25) des Risses (7) und bei einem späteren Umschmelzen quer zur Längsrichtung (25) wird erreicht, dass kein Material in dem durchgehenden Riss absinken kann.

## Beschreibung

Die Erfindung betrifft ein Verfahren zum Umschmelzen von durchgehenden Rissen, um das Schmelzbad abzusichern.

Durchgehende Risse werden durch Schweißen umgeschmolzen, um sie zu verschließen, damit das Bauteil, das einen solchen durchgehenden Riss aufwies, wieder verwendet werden kann.

Beim Stand der Technik besteht das Problem darin, dass sich der Riss an der Oberfläche, auf die der Schweißstrahl auftrifft, weitet oder Schmelzmaterial in den Riss weiter absinkt.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Durch das Verfahren wird vorteilhafterweise ein Absinken von Material in den Riss verhindert.

Es zeigen:
- Figur 1: einen Ablauf eines Umschmelzverfahrens nach dem Stand der Technik,
- Figur 2: eine erfindungsgemäße Vorgehensweise beim Umschmelzen von durchgehenden Rissen.

Die Figuren und die Beschreibung stellen nur Ausführungsbeispiele der Erfindung dar.

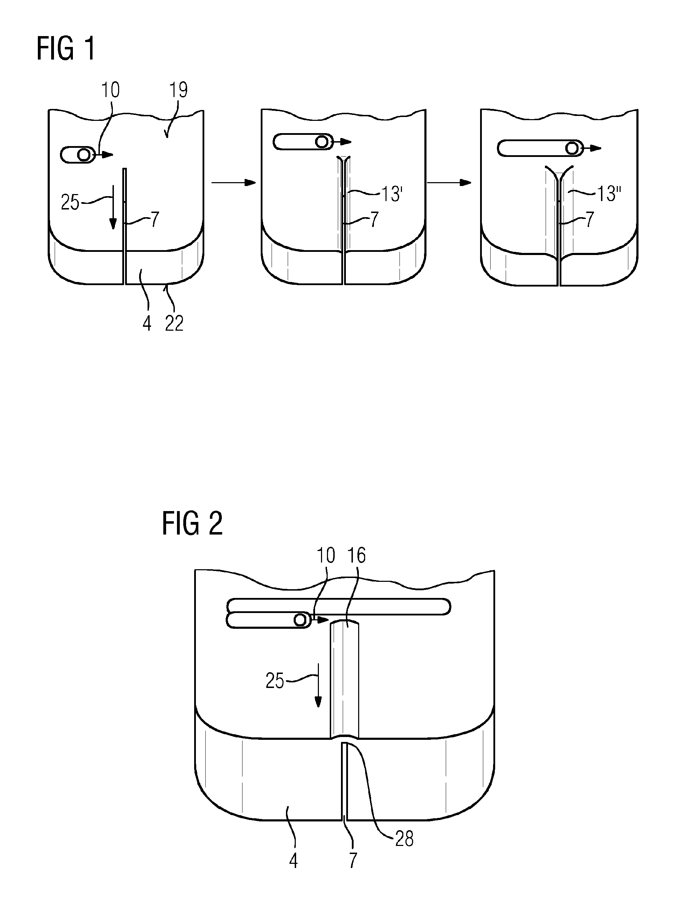

In Figur 1 ist ein Substrat 4 mit einem durchgehenden Riss 7 gezeigt.
Das Substrat 4 weist eine Oberseite 19 und eine Unterseite 22 auf, d.h. der durchgehende Riss 7 erstreckt sich von der Oberseite 19 bis zur Unterseite 22.
Der Riss 7 erstreckt sich in einer Ausbreitungsrichtung 25. Nur schematisch, aber nicht einschränkend, muss der Riss 7 an einer Seitenfläche des Substrats 4 enden.
Der Riss 7 wird durch einen Schweißstrahl behandelt, wobei dies ein Schweißstrahl konventioneller Plasma-Schweißgeräte, Laserstrahlen oder Elektronenstrahlen sein können.
Der Schweißstrahl wird in Richtung 10 und einem deutlich von 0° verschiedenen Winkel vorzugsweise 90° ± 10° zur Ausbreitungsrichtung 25 des Risses über den Riss 7 verfahren.
Dies kann vorzugsweise mäanderförmig erfolgen oder immer von einer Seite aus von links nach rechts (siehe auch Figur 2).

Dabei kommt es, je näher der Schweißstrahl sich dem Riss 7 nähert, zur Verbreiterung 13', 13" des Risses 7, weil das Material insbesondere bei großen Rissen (insbesondere > 150µm) in die Tiefe gezogen wird und durchsackt.

Erfindungsgemäß wird daher vorgeschlagen, den Riss 7 längs seiner Ausbreitungsrichtung 25 vorab zu verschließen (Figur 2).
Das oberflächige Verschließen des Risses 7 kann durch eine modifizierte Umschmelzung erfolgen, wobei dies vorzugsweise mit einer geringeren Schweißleistung, vorzugsweise mindestens 20% weniger, erfolgt wie bei der späteren Umschmelzung zum kompletten Umschmelzen.
Durch diesen ersten Umschmelzbereich 16 wird verhindert, dass beim erneuten Aufschmelzen des Bereichs um den Riss 7 das aufgeschmolzene Material nicht in den Riss 7 hineingezogen wird.

Alternativ kann der Riss 7 vorab durch Auftragsschweißen längs der Ausbreitungsrichtung 25 verschlossen werden. Das Auftragsschweißen 16 muss nicht rissfrei erfolgen.
Es kann dabei das Material des Substrats 4 verwendet werden oder jedes andere Material als Auftragsmaterial verwendet werden.

Dann wird in beiden Fällen wie schematisch in Figur 2 angedeutet der Schweißstrahl von links nach rechts und von rechts nach links oder mäanderförmig oder im immer nur von links beginnend unter einem deutlich von 0° verschiedenen Winkel zur Ausbreitungsrichtung 25 des Risses 7 geführt.

Diese Verfahrweise hat den Vorteil, dass der Riss 7 auch bei nicht geradlinigem Verlauf oder bei Vorhandensein von Mehrfachrissen oder Zick-Zack-Verlauf vollständig durch den Umschmelzbereich erfasst wird.

Das Verfahren lässt sich auch bei längs zueinander verlaufenden Rissen anwenden.

Der Oberflächenbereich 28 stellt vorzugsweise höchstens 20% der Risstiefe oder des späteren Umschmelzbereichs dar.

Risse sollen möglichst komplett umgeschmolzen werden. Es gibt jedoch eine Risstiefe und Rissgröße, ab denen ein solcher Fehler keinen Einfluss mehr auf die mechanischen Eigenschaften hat.

## Patentansprüche

1. Verfahren
zum Umschmelzen von durchgehenden oder sehr tiefen Rissen (7) in einem Substrat (4),
insbesondere von durchgehenden Rissen (7),
durch einen Schweißstrahl,
wobei der Riss (7) eine Ausbreitungsrichtung (25) aufweist,
wobei in einem ersten Schritt der Riss (7) nur in einem Oberflächenbereich (28) verschlossen wird und
dann in einem zweiten Schritt der Schweißstrahl in einer zweiten Richtung (10) über den Riss (7) verfahren wird,
wobei der Winkel zwischen der zweiten Richtung (10) und der Ausbreitungsrichtung (25) des Risses (7) vorzugsweise 90° ± 10° beträgt und
insbesondere wobei der Schweißstrahl immer wieder von links nach rechts oder von rechts nach links oder
mäanderförmig quer zur Ausbreitungsrichtung (25) über den Riss (7) verfahren wird,
um den Riss (7) entlang seiner kompletten Risstiefe möglichst komplett umzuschmelzen.

2. Verfahren nach Anspruch 1,
bei dem der Riss (7) im ersten Schritt auftragsgeschweißt (16) wird,
insbesondere entlang der Ausbreitungsrichtung (25),
ganz insbesondere durch eine einzelne Schweißraupe.

3. Verfahren nach Anspruch 1,
bei dem der Schweißstrahl längs der Ausbreitungsrichtung (25) über den Riss (7) verfahren wird,
um einen ersten Umschmelzbereich zu erzeugen,
der den Riss (7) nur im Oberflächenbereich (28) verschließt.

4. Verfahren nach Anspruch 3,
bei dem die Schweißleistung zur Erzeugung des ersten Umschmelzbereichs zum Verschließen eine deutlich geringere Schweißleistung,
insbesondere mindestens 20% geringere Schweißleistung, aufweist als im nachfolgenden Prozess zum Umschmelzen des Risses (7).

5. Verfahren nach einem oder mehreren der Ansprüche 1 bis 4,
bei dem ein Laserstrahlverfahren angewendet wird.

6. Verfahren nach einem oder mehreren der Ansprüche 1 bis 5,
bei dem das Verfahren angewendet wird bei durchgehenden Rissen (7),
insbesondere mit einer Rissweite von 150µm.

7. Verfahren nach einem oder mehreren der Ansprüche 2, 4, 5 oder 6,
bei dem das Material der Auftragsschweißung das Material des Substrats (4) ist.
